Europäisches Patentamt

(19) European Patent Office

Office européen des brevets

(11) Numéro de publication : **0 053 570**
**B1**

(12) **FASCICULE DE BREVET EUROPÉEN**

(45) Date de publication du fascicule du brevet :
07.08.85

(51) Int. Cl.⁴ : **A 01 D 51/00, A 01 G 17/00**

(21) Numéro de dépôt : **81430040.6**

(22) Date de dépôt : **23.11.81**

(54) **Giro-andaineur frontal.**

(30) Priorité : 24.11.80 FR 8025137

(43) Date de publication de la demande :
09.06.82 Bulletin 82/23

(45) Mention de la délivrance du brevet :
07.08.85 Bulletin 85/32

(84) Etats contractants désignés :
AT BE CH DE FR GB IT LI NL

(56) Documents cités :
US-A- 3 961 469

(73) Titulaire : ETABLISSEMENTS PELLENC ET MOTTE
(Société à responsabilité limitée)
Quartier Notre-Dame Route de Villelaure
F-84120 Pertuis (FR)

(72) Inventeur : Pellenc, Roger Joseph Pierre
Quartier de la Piscine
F-84120 Pertuis (FR)

(74) Mandataire : Marek, Pierre
32, rue de la Loge
F-13002 Marseille (FR)

## Description

La présente invention concerne un giro-andaineur frontal du genre apte à être installé à l'avant d'un véhicule porteur et comportant des organes de ratissage rotatifs entraînés en rotation par des moteurs hydrauliques ; une machine de ce genre permettant de mettre en andain, sensiblement dans l'axe d'avancement dudit véhicule, les résidus de végétation tels que sarments de vignes coupés, bois de taille ou autres, ou des fruits tombés au sol tels que citrons, oranges ou autres, ou de l'herbe coupée.

On connaît déjà (US-A-3 893 286) une machine automotrice destinée au ramassage de fruits tels que citrons, oranges ou similaires et comportant des brosses rotatives montées à l'avant d'un véhicule porteur, lesdites brosses étant entraînées en rotation par des moteurs hydrauliques ; ces brosses permettant soit d'écarter les fruits se trouvant sur le passage des roues dudit véhicule, soit de projeter ces derniers déjà rassemblés en andains, vers l'entrée d'un dispositif de récolte également disposée à l'avant du véhicule.

Un inconvénient important de ce type de machine résulte du fait que ses brosses rotatives sont montées sur des bras orientés de manière convergente par rapport à l'axe et au sens d'avancement de ladite machine et reposent sur le sol sous l'effet de la totalité de leur propre poids qui est relativement important. Ses bras porte-brosses tendent à s'écarter lors de l'avancement de la machine et il est donc nécessaire de les fixer de manière particulièrement robuste sur le châssis de celle-ci, pour supporter les chocs lors de la rencontre d'obstacles, tandis que l'importante pression des brosses de ratissage sur le sol est une cause de labourage non souhaitable de ce dernier et d'accélération de l'usure desdites brosses.

On connaît des machines de râtelage pour fruits tombés au sol et dotées de moyens de relevage des ensembles de râtelage (US-A-3 879 923), mais ces derniers sont montés latéralement sur le véhicule porteur et chacun d'eux est assujetti à son propre dispositif de relevage, de sorte qu'il s'agit de machines coûteuses lesquelles ne permettent pas non plus l'attelage d'une machine complémentaire à l'arrière dudit vahicule, compte tenu du fait que certains des organes de râtelage se trouvent disposés en arrière de ce dernier.

En raison du fait que les machines conçues pour le râtelage des fruits ne sont pas applicables sans transformation importante au ratissage des résidus de végétation, on utilise, pour ce travail, des giro-andaineurs destinés à être installés à l'arrière d'un tracteur agricole (NL-A-7701572) et comportant une barre d'entraînement apte à être accouplée à la prise de force dudit tracteur et une transmission mécanique assurant la rotation des toupies de râtelage.

De telles machines sont toutefois affectées d'une importante insuffisance dans leurs applications au ratissage des sarments de vigne coupés et des bois de taille. En effet, si l'on considère que ces derniers sont ensuite déchiquetés à l'aide d'un broyeur également attelé à l'arrière d'un tracteur, il est nécessaire d'effectuer un premier passage dans les vignes ou dans les allées fruitières pour ratisser les sarments coupés ou les bois de taille, puis, un second passage pour procéder à leur broyage ou à leur ramassage.

La présente invention a donc pour but de remédier aux inconvénients et aus insuffisances des machines de ratissage connues et, plus particulièrement, de celles qui sont destinées à être installées à l'avant d'un véhicule porteur et comportant des organes de ratissage entraînés en rotation par des moteurs hydrauliques.

Selon une première caractéristique, le giro-andaineur frontal suivant l'invention est remarquable par le fait que les deux dispositifs de ratissage sont assujettis à un système de relevage commun, comportant au moins un vérin, et par le fait que les bras portant les toupies de ratissage sont montés avec une aptitude de mouvement dans un plan perpendiculaire au plan vertical, ce mouvement étant obtenu au moyen de vérins reliant lesdits bras à la poutre porteuse qui soutient par ailleurs ces bras à une de leurs extrémités.

Grâce à cette disposition, il est posible de régler et de diminuer la pression d'appui des toupies de ratissage sur le sol, ce qui évite le labourage de celui-ci et réduit le frottement des toupies de ratissage, en limitant, par conséquent, l'usure de ces dernières. D'autre part, les toupies de ratissage peuvent être placées avec l'écartement désiré et les forces qui tendent à les écarter lors de l'avancement de la machine sont supportées par les vérins d'écartement permettant d'absorber des chocs éventuels résultant de la rencontre d'obstacles et de les ramener automatiquement dans la position souhaitée.

Un autre avantage important du giro-andaineur frontal suivant l'invention est qu'il peut être positionné, de manière amovible, à l'avant d'un tracteur agricole de type courant et mû par l'installation hydraulique de ce dernier, à l'arrière duquel peut être installé un gyrobroyeur ou autre machine de broyage accouplée à la prise de force dudit tracteur, cette machine avalant complètement l'andain central constitué, au fur et à mesure de l'avance dudit tracteur.

Il est donc notamment possible d'effectuer le ratissage et le déchiquetage des sarments ou des bois de taille en un seul passage dans les vignes ou les allées fruitières, ce qui permet de réduire de plus de moitié la durée actuellement nécessaire pour l'exécution de ces travaux.

Ces buts, caractéristiques et avantages, et d'autres encore, ressortiront mieux de la description qui suit et des dessins annexés dans lesquels :

La figure 1 est une vue de face d'un premier mode d'exécution du giro-andaineur selon l'invention, représenté installé à l'avant d'un tracteur agricole.

La figure 2 est une vue en plan de la figure 1.

La figure 3 est une vue de face, à plus grande échelle, de la partie centrale du giro-andaineur.

La figure 4 est une vue de côté et en coupe suivant la ligne 4-4 de la figure 3, illustrant l'attelage du giro-andaineur sur la traverse frontale du châssis d'un tracteur.

La figure 5 est une vue en plan de la figure 3.

La figure 6 est une vue de face avec coupe partielle et à plus grande échelle de l'un des moyens de ratissage et de son dispositif de montage réglable à l'extrémité de l'un des bras du giro-andaineur.

La figure 7 est une vue en plan, à échelle plus réduite, de ce dispositif de montage réglable.

La figure 8 est une vue en coupe verticale selon la ligne 8-8 de la figure 6, montrant le profil de l'un des déflecteurs de la machine.

La figure 9 est une vue en plan d'un autre mode d'exécution du giro-andaineur dont les toupies de ratissage sont représentées en position rapprochée, avant relevage.

La figure 10 est une vue de côté de la figure 9, le giro-andaineur étant représenté installé à l'avant d'un tracteur agricole, dans une position de travail.

La figure 11 est une vue de côté illustrant la position relevée des toupies de ratissage, à l'avant du tracteur.

La figure 12 est une vue en coupe suivant la ligne 12-12 de la figure 9.

La figure 13 est une vue en coupe analogue à la figure 12 et montrant le pivotement des éléments sustentateurs mobiles, dans la position de relevage des toupies de ratissage.

La figure 14 est une vue de côté d'un troisième mode d'exécution du giro-andaineur selon l'invention, illustré installé à l'avant d'un tracteur agricole, dans une position de travail.

La figure 15 est une vue de face de ce giro-andaineur dont les toupies de ratissage sont représentées en position rapprochée, avant relevage.

La figure 16 est une vue en plan de la figure 15.

La figure 17 est une vue de côté illustrant la position relevée des toupies de ratissage, à l'avant du tracteur.

La figure 18 est une vue de détail, en coupe axiale, illustrant le dispositif de suspension à ressort de compression propre à chaque ensemble de ratissage et équipant le mode d'exécution représenté aux figures 9 à 13.

La figure 19 est une vue de détail, à plus grande échelle et en coupe suivant la ligne 19-19 de la figure 10.

On se reporte auxdits dessins pour décrire des exemples avantageux de réalisation du giro-andaineur frontal selon l'invention, lequel est destiné à être installé, de façon séparable, à l'avant d'un tracteur agricole et comporte, dans ce but, des moyens de fixation permettant son montage amovible sur un élément frontal du châssis dudit tracteur ou sur un bâti sustentateur rigidement fixé à l'avant dudit châssis.

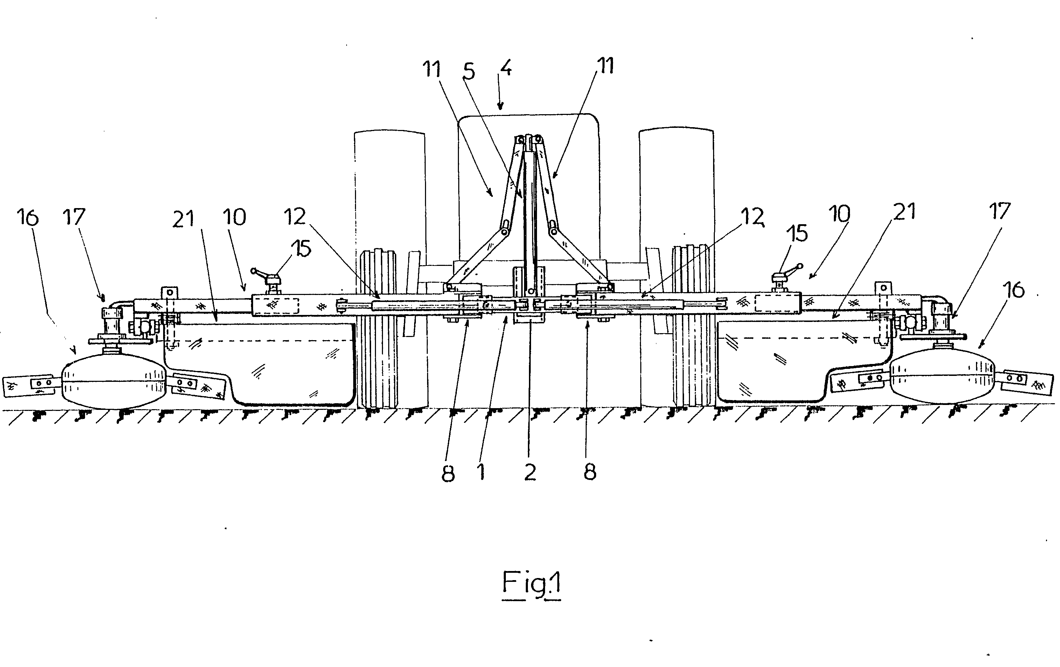

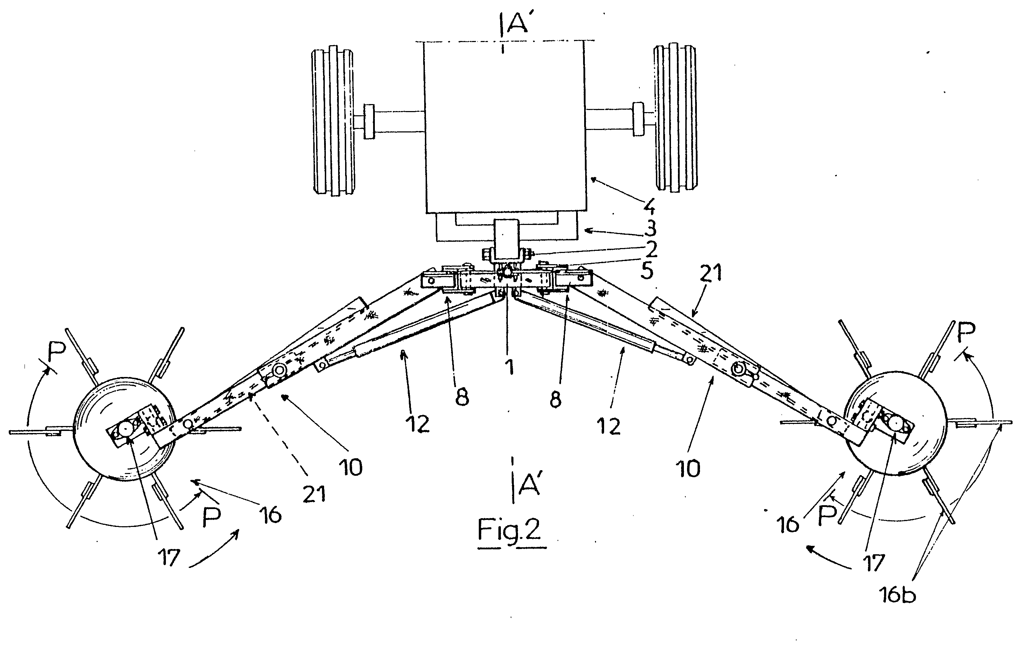

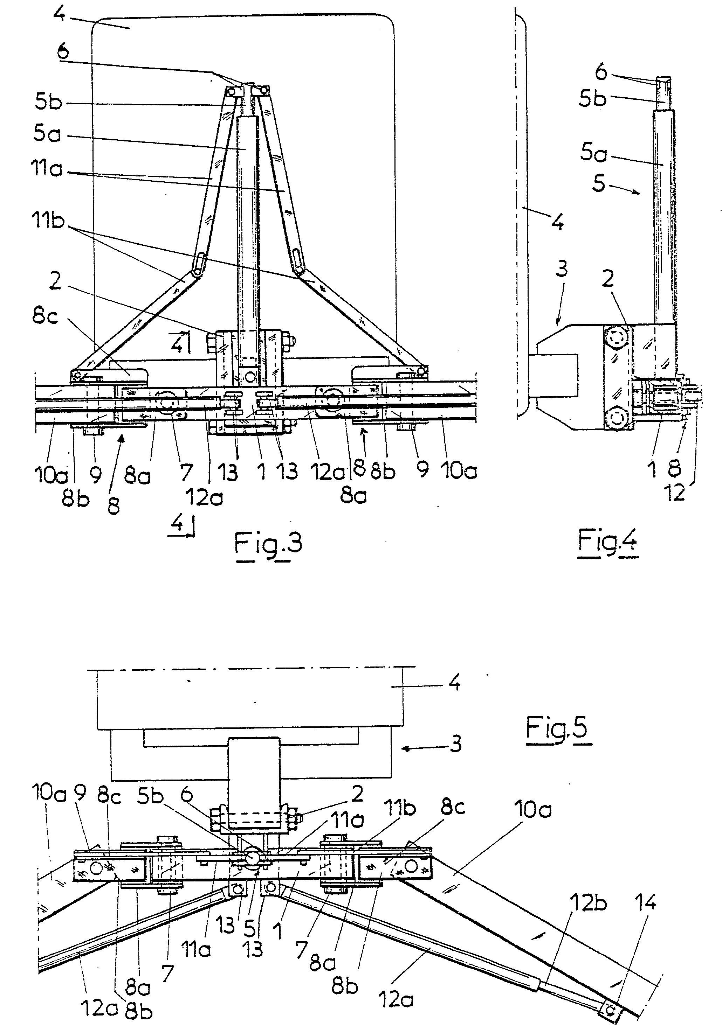

Suivant un premier mode d'exécution illustré aux figures 1 à 8, le giro-andaineur comprend un bâti constitué par une poutre porteuse horizontale 1 rigidement solidaire d'au moins une chape d'attelage 2 permettant son installation amovible sur une traverse frontale 3 du châssis du tracteur 4 ou d'un bâti sustentateur rigidement fixé à l'avant dudit châssis. Dans sa partie médiane, la poutre 1 est rigidement solidaire de la base du corps 5a d'un vérin hydraulique 5 disposé verticalement ou perpendiculairement à ladite poutre. L'extrémité supérieure de la tige 5b de ce vérin central porte une potence double 6 dont chaque bras est avantageusement constitué par une chape. Sur chaque côté de la poutre 1, est articulée, au moyen d'un axe horizontal 7 disposé perpendiculairement à ladite poutre, la chape intérieure 8a d'une double chape 8. Dans la chape extérieure 8b orientée perpendiculairement à la chape intérieure 8a de ladite double chape, est articulée, au moyen d'un axe 9 disposé perpendiculairement à l'axe 7, l'extrémité d'un bras 10 lequel se trouve donc monté sur la poutre 1 avec une aptitude de pivotement dans deux plans perpendiculaires.

Chacun des deux bras 10 peut en effet pivoter, sous l'effet des moyens décrits ci-après, dans un plan vertical autour de l'axe 7 et également dans un plan perpendiculaire autour de l'axe 9. Chaque double chape 8 est reliée à l'une des chapes de la potence double 6 au moyen d'une bielle articulée 11 constituée de deux biellettes 11a, 11b dont l'une est articulée dans l'une des chapes de la potence double et l'autre sur la double chape 8 disposée du même côté. La biellette inférieure 11b est, par exemple, articulée sur une patte d'attache 8c solidaire de la flasque supérieure de la chape extérieure 8b.

On conçoit que l'allongement du mât extensible constitué par le vérin 5 entraîne le pivotement simultané vers le haut des deux bras 10, tirés par l'intermédiaire des biellettes articulées 11, jusqu'à une position verticale ou sensiblement verticale, afin de réduire l'encombrement latéral de la machine, par exemple en vue de son remisage ou de sa circulation sur les routes ou les chemins. Inversement, l'escamotage de la tige dudit vérin assure l'abaissement desdits bras jusqu'à une position de travail sensiblement horizontale. Cet unique système de relevage permet donc le relevage simultané des deux dispositifs de ratissage décrits ci-après et portés par les bras 10.

Le pivotement de chaque bras 10 dans un plan perpendiculaire au plan vertical, est réalisé au moyen d'un vérin hydraulique 12 reliant la poutre 1 et ledit bras. L'extrémité postérieure du corps 12a de ce vérin est, par exemple, articulée sur une attache pivotante 13 solidaire de la poutre 1, tandis que l'extrémité de sa tige 12b est articulée dans une chape pivotante 14 solidaire dudit bras.

Chaque bras 10 est, de préférence, extensible et avantageusement constitué par deux tubes de section quadrangulaire assemblés de manière télescopique. Le tube extérieur 10a est articulé dans la chape extérieure 8b de la double chape 8 et porte la chape 14 d'articulation de la tige 12b du vérin 12, alors que le tube intérieur coulissant 10b porte les organes de ratissage et leur moyen d'entraînement en rotation décrits par la suite. Un dispositif de verrouillage 15 connu en soi et porté par le tube extérieur 10a permet de rigidifier chaque bras 10 à la longueur désirée. L'extrémité extérieure de chaque bras extensible ainsi réalisé porte une toupie de ratissage 16 et son moyen d'entraînement en rotation lequel est avantageusement constitué par un moteur hydraulique 17 apte à être alimenté par le circuit hydraulique du tracteur.

Selon une disposition caractéristique de l'invention, chaque toupie de ratissage 16 est montée révolutive autour d'un axe A-A incliné vers l'intérieur et vers l'arrière, de façon à ne se trouver au contact du sol, en position de travail, que sur une surface sensiblement demi-circulaire se trouvant à l'extérieur d'un plan diamétral P-P formant un angle compris entre 30° et 60° avec l'axe de progression A'-A' du giro-andaineur. En outre, suivant une autre disposition caractéristique, chaque toupie de ratissage est solidarisée à l'extrémité de son bras porteur 10 au moyen d'un dispositif permettant un réglage de son orientation. Pour celà et de manière très avantageuse, les toupies de ratissage 16 sont suspendues aux bras 10 à l'aide d'une rotule. Par exemple, chaque moteur hydraulique 17 est fixé sur une plaque oscillante 18 rigidement solidaire d'une rotule 19 s'élevant sur sa face supérieure. Cette rotule est logée dans un berceau 20.

Ce dernier comprend principalement : d'une part, une plaque 20a rigidement solidaire de la face inférieure du tube 10b et disposée perpendiculairement à ce dernier et, d'autre part, une contre-plaque flottante 20b assemblée à ladite plaque par une paire de boulons 20c. Lesdits boulons traversent des perçages ménagés en regard dans la plaque 20a et dans la contre-plaque 20b, de part et d'autre des ouvertures 20d à surface de contact sphérique que présentent lesdites plaque et contre-plaque pour l'appui de la rotule 19. Un gousset 20e soudé sur le bord supérieur de la plaque 20a et sur le tube 10b surmonte le logement de la roture. Chaque toupie de ratissage 16 comporte un corps ou patin central creux 16a ayant la forme d'un ellipsoïde de révolution aplati et une pluralité de pales de ratissage radiales 16b fixées sur la périphérie dudit patin. Ces pales de ratissage sont exécutées dans un matériau présentant une certaine souplesse telle que caoutchouc ou élastomère de synthèse et sont fixées, par boulonnage ou autrement, sur des plaques radiales rigides 16c fixées par soudure ou autrement sur la périphérie du patin central. Chaque toupie de ratissage ainsi réalisée comporte encore un organe axial d'assemblage 16d permettant son accouplement à l'arbre du moteur hydraulique 17 assurant son entraînement. Cet organe d'assemblage est, par exemple, constitué par un tenon cylindrique accouplé à l'arbre du moteur et dans le prolongement dudit arbre, au moyen d'un manchon d'assemblage.

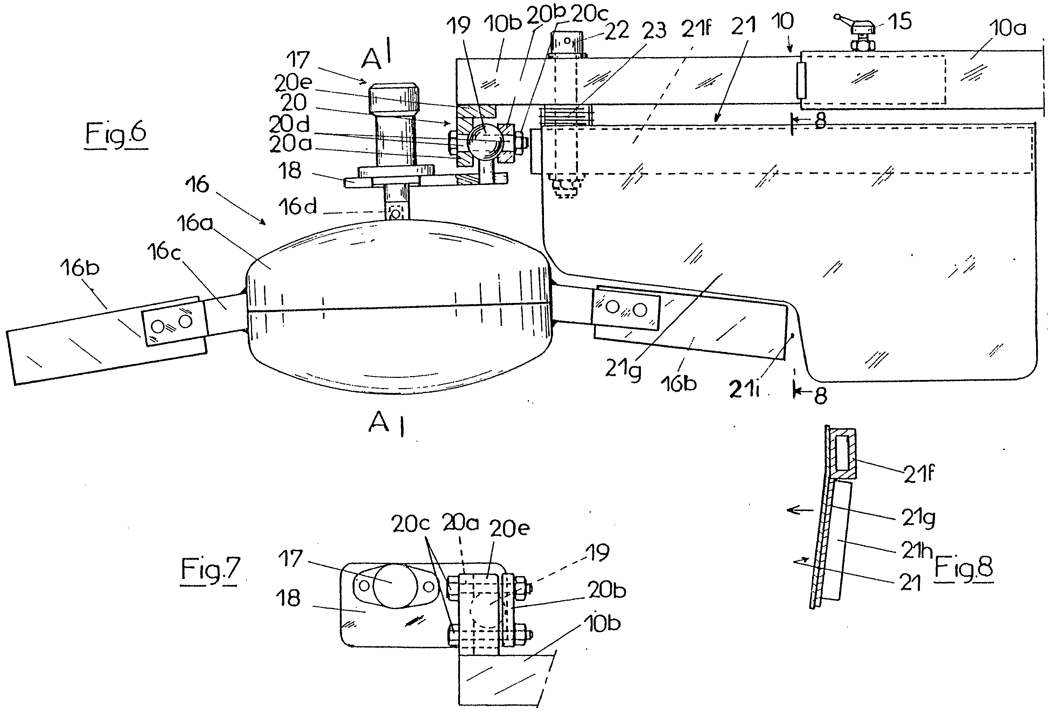

On conçoit que l'orientation de chaque toupie de ratissage ainsi agencée et montée à l'extrémité d'un arbre 10, peut être aisément réglée, par exemple en fonction de la configuration des terrains. En outre, il est aussi possible de régler l'écartement des toupies de balayage 16 au moyen des bras télescopiques 10, par exemple afin de l'adapter à la largeur des allées fruitières ou à l'écartement des rangs de vigne. Enfin, l'extrémité extérieure de chaque bras 10 porte également un déflecteur 21 solidarisé audit bras au moyen d'une articulation à friction connue en soi, par exemple du genre comportant un axe 22 et un empilage de plaquettes 23 alternativement solidaires dudit bras et dudit déflecteur. Suivant le mode d'exécution illustré à la figure 6, chaque déflecteur est constitué par un longeron tubulaire supérieur 21f sur lequel est fixée, par soudure ou autrement, une tôle 21g rigidifiée par des renforts espacés 21h disposés perpendiculairement auxdits longerons. Compte tenu de la proximité des articulations des toupies de ratissage et des déflecteurs, ces derniers se trouvent placés dans des plans interceptant le champ de rotation des pales de ratissage desdites toupies. Lesdits déflecteurs comportent donc une découpure 21i permettant le passage desdites pales de ratissage ou balais. D'autre part, comme le montre la figure 8, la plaque ou tôle 21g des déflecteurs a une position inclinée vers l'avant en considérant le sens d'avancement de la machine.

En position de travail, les déflecteurs 21 ont une position sensiblement parallèle à celle des bras 10 ou une position légèrement décalée angulairement en arrière desdits bras en considérant le sens de progression de la machine.

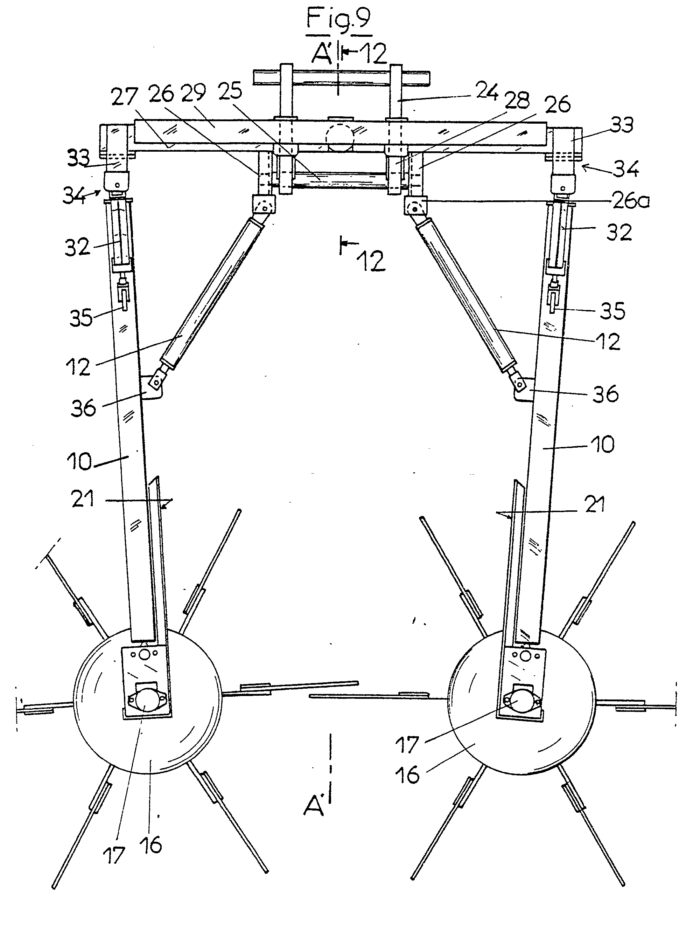

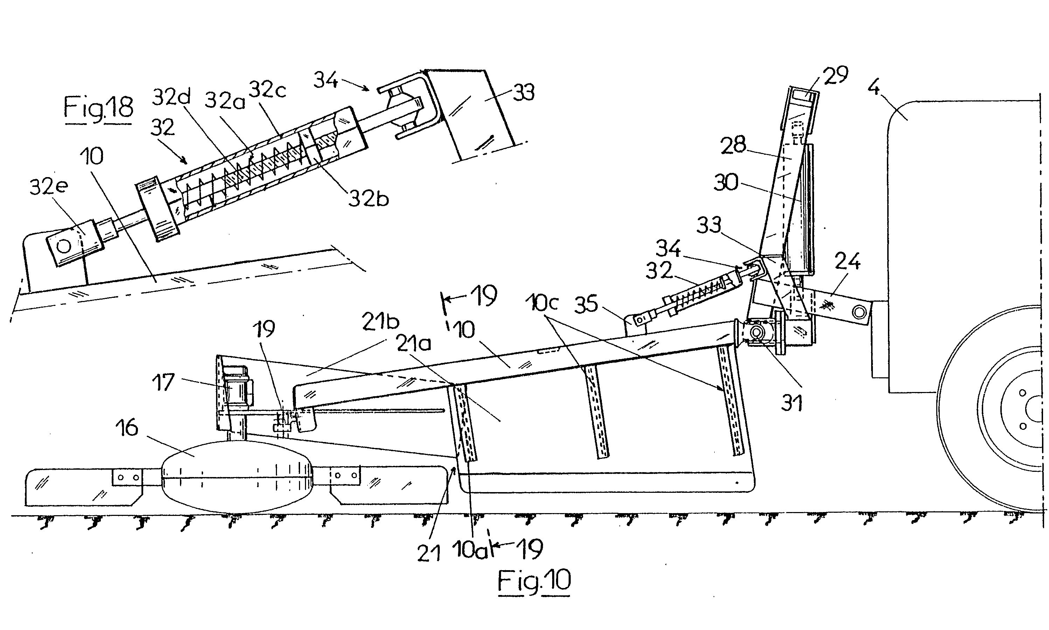

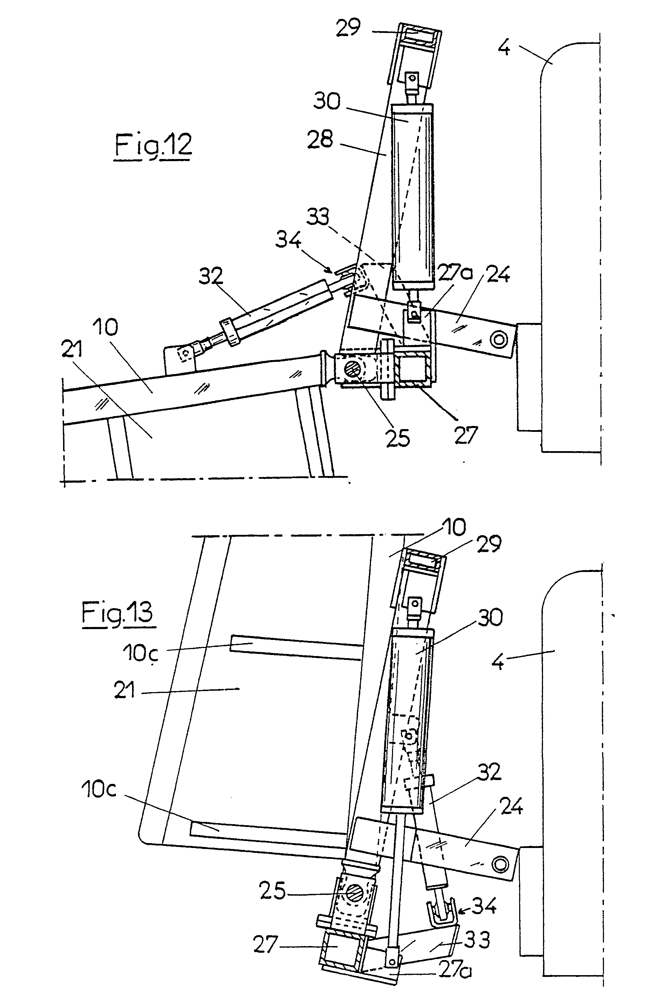

On a représenté, aux figures 9 à 13, un autre mode d'exécution du giro-andaineur frontal qui diffère de celui qui vient d'être décrit principalement par les moyens permettant d'obtenir le relevage simultané des deux bras portant les toupies de ratissage et leur moteur d'entraînement, et par la prévision d'une suspension élastique propre à chacun desdits bras.

Selon ce mode d'exécution, le bâti fixe 24 portant les divers organes mobiles du giro-andaineur et permettant son montage amovible à l'avant d'un tracteur agricole 4, comprend un axe horizontal 25 disposé transversalement et sur chaque extrémité duquel est monté, avec une aptitude de pivotement, un bras 26.

Ces deux bras 26 sont rigidement solidaires, par l'une de leurs extrémités, d'une poutre mobile 27 disposée parallèlement à l'axe 25, c'est-à-dire transversalement par rapport à l'axe de progression du giro-andaineur. Cette poutre transversale est placée à distance de l'axe 25 et peut donc pivoter autour de ce dernier. Ledit axe est encore rigidement solidaire de l'extrémité inférieure de deux montants 28 rigidement solidaires, par leur extrémité supérieure, d'une barre de contre-appui 29 disposée parallèlement à l'axe 25 et à la poutre pivotante 27. Un vérin 30 relie la barre 29 et la poutre 27, l'extrémité postérieure du corps de ce vérin étant, par exemple, articulée dans une chape solidaire de ladite barre, tandis que l'extrémité extérieure de la tige dudit vérin est articulée sur un levier 27a rigidement solidaire de ladite poutre et disposé perpendiculairement à cette dernière. Ce levier est avantageusement constitué par une patte d'attache ou par une chaque rapportée sur la face supérieure de la poutre pivotante.

Les bras 10 portant les toupies de ratissage 16 et leur moteur hydraulique d'entraînement 17 sont assujettis aux extrémités de la poutre 27, de façon à pouvoir former un angle avec cette dernière. De manière avantageuse, les bras 10 sont reliés à la poutre 27 au moyen de joints de cardan 31 dont les axes d'articulation sont alignés avec l'axe 25.

D'autre part, un dispositif de suspension élastique 32 tel qu'un dispositif de suspension à ressort de compression, relie chaque bras 10 à une petite potence 33 rigidement solidaire, par son extrémité inférieure, de la poutre pivotante 27. L'extrémité postérieure du corps de ce dispositif de suspension élastique est, par exemple, articulée au moyen d'un joint de cardan 34 à la partie supérieure de la potence 33, tandis que l'extrémité extérieure de la tige dudit dispositif est articulée sur une patte 35 solidaire du bras 10.

Des moyens permettent un réglage de la raideur du ressort 32a de ce dispositif. Ces moyens sont avantageusement constitué par un écrou carré 32b monté avec une aptitude de déplacement axial dans le corps 32c du dispositif présentant une section carrée complémentaire. Cet écrou immobilisé en rotation prend appui sur l'une des extrémités du ressort 32a, et il est traversé par une tige filetée 32d solidaire de l'une des attaches extérieures 32e du dispositif et immobilisée, en translation axiale de toute manière connue. On comprend qu'en faisant tourner la tige 32d, on provoque un mouvement axial de l'écrou 32b lequel permet de bander plus ou moins le ressort 32a.

Grâce à ces dispositifs de suspension élastique indépendants 32, il est possible d'obtenir un allègement des toupies de ratissage, en diminuant la force de leur appui sur le sol, par l'intermédiaire du vérin de relevage dont un faible allongement provoque, en effet, un étirement desdits dispositifs. La pression des toupies de ratissage sur le sol étant moindre, leur entraînement en rotation demande moins d'énergie. En outre, lesdites toupies de ratissage ainsi suspendues élastiquement peuvent épouser les inégalités du terrain en cours de travail.

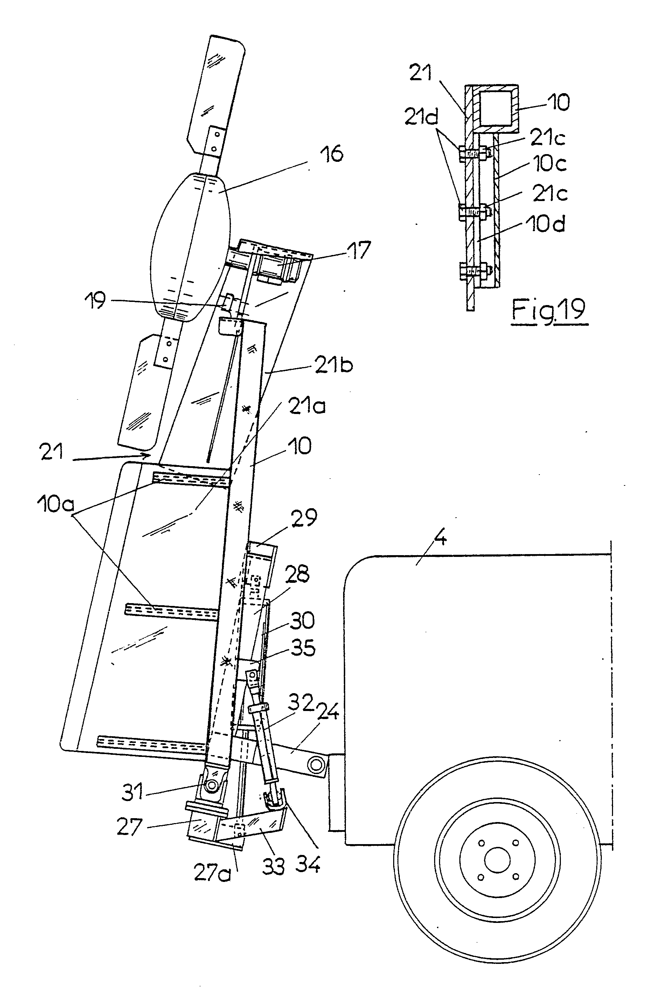

Deux vérins 12 assurent l'écartement ou le rapprochement des bras 10, chacun desdits vérins étant, par exemple, articulé d'une part, par l'extrémité extérieure de sa tige, sur une patte 36 dont est pourvu chacun desdits bras et, d'autre part, par l'extrémité postérieure de son corps, dans une chape 26a solidaire de l'extrémité libre du bras 26 le plus proche. On conçoit que pour relever les deux bras de ratissage à partir de la position de travail, il suffit d'abord de les rapprocher en rentrant la tige des vérins 12 (figure 9), puis de mettre en extension le vérin 30 dont la poussée provoque le pivotement de la poutre 27 en direction du bas, ce qui a pour effet, dans un premier temps, d'occasionner un allongement des dispositifs de suspensions élastique 32, puis d'entraîner lesdits bras dans un mouvement de pivotement vers le haut jusqu'à une position inclinée au-delà de la verticale, dans laquelle ces derniers viennent en appui contre la face antérieure de la barre 29 servant de butée et qui présente une longueur adéquate (figure 11).

Le giro-andaineur comporte également des déflecteurs 21 qui sont avantageusement réalisés en deux parties, soit un premier élément 21a solidaire des bras 10 et un deuxième élément 21b fixé au support 18 des moteurs 17 à l'arbre desquels sont accouplées les toupies de ratissage 16. De la sorte, chaque élément 21b occupe toujours une position correcte par rapport à la toupie de ratissage dont il est solidaire, quelle que soit l'inclinaison donnée à l'axe de cette dernière, position dans laquelle il est nécessaire d'interdire les projections de produits ratissés en direction de l'extérieur, tout en permettant le passage des pales de ratissage 16b. En outre, les éléments 21a sont fixés aux bras 10 avec une possibilité de réglage dans le plan vertical. Pour cela, les bras 10 sont rigidement solidaires de glissières 10c disposées perpendiculairement à ces derniers et constituées par des tubes de section carrée ou rectangulaire pourvus d'une fente longitudinale 10d sur l'une de leurs faces parallèles auxdits bras. D'autre part, l'élément 21a du déflecteur comporte des trous superposés disposés en regard des fentes 10d des glissières 10c. Ces orifices et lesdites fentes permettent le passage de la tige de vis 21d se vissant dans des écrous 21c logés dans les glissières et immobilisés en rotation par les parois opposées de ces dernières.

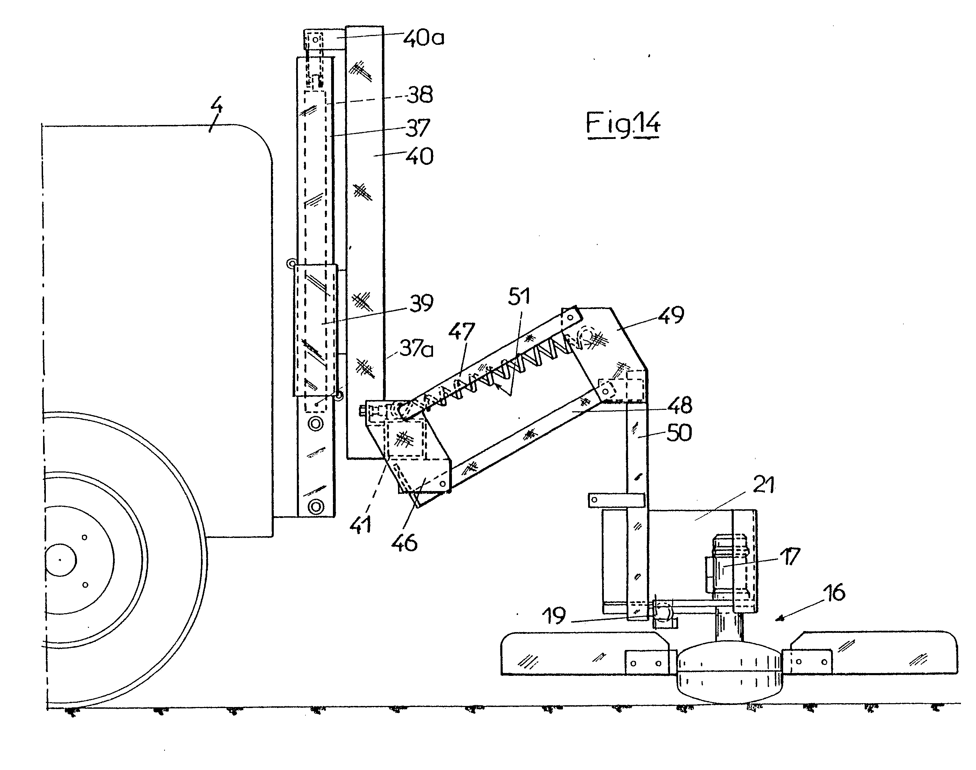

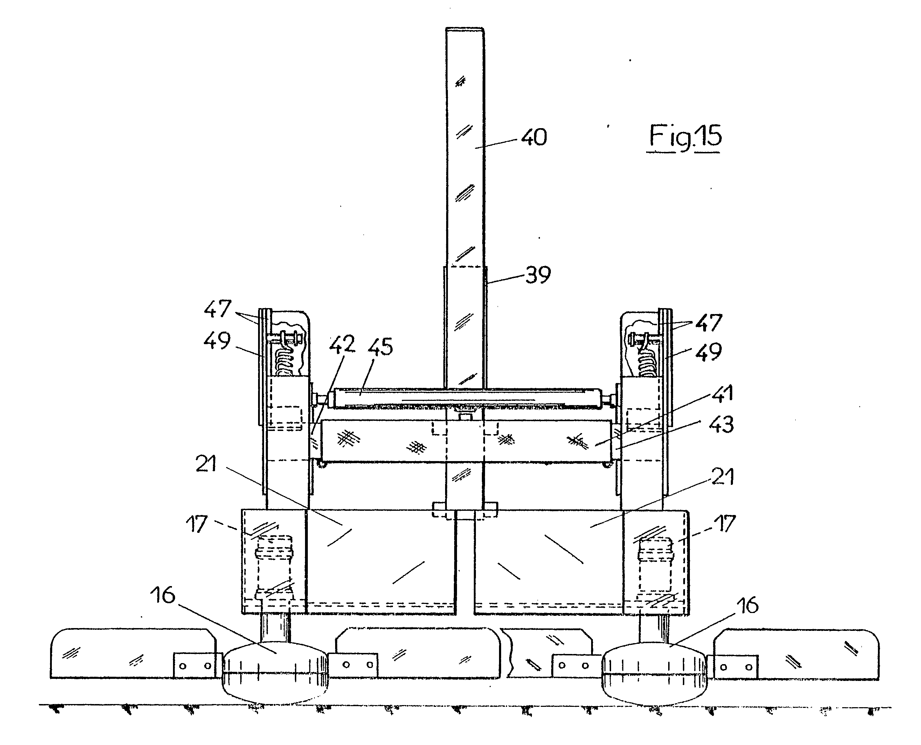

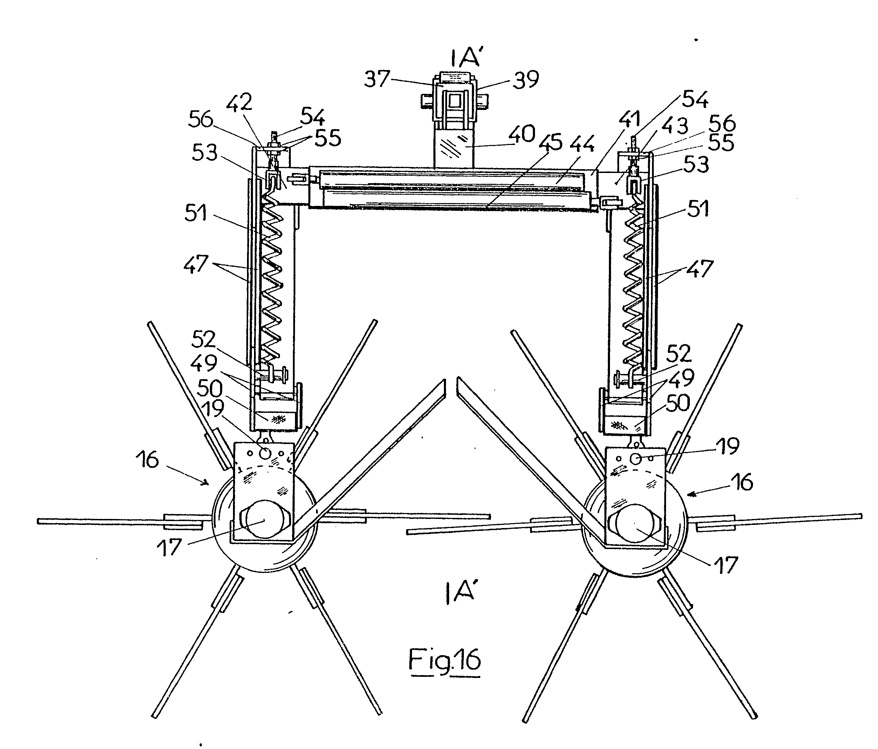

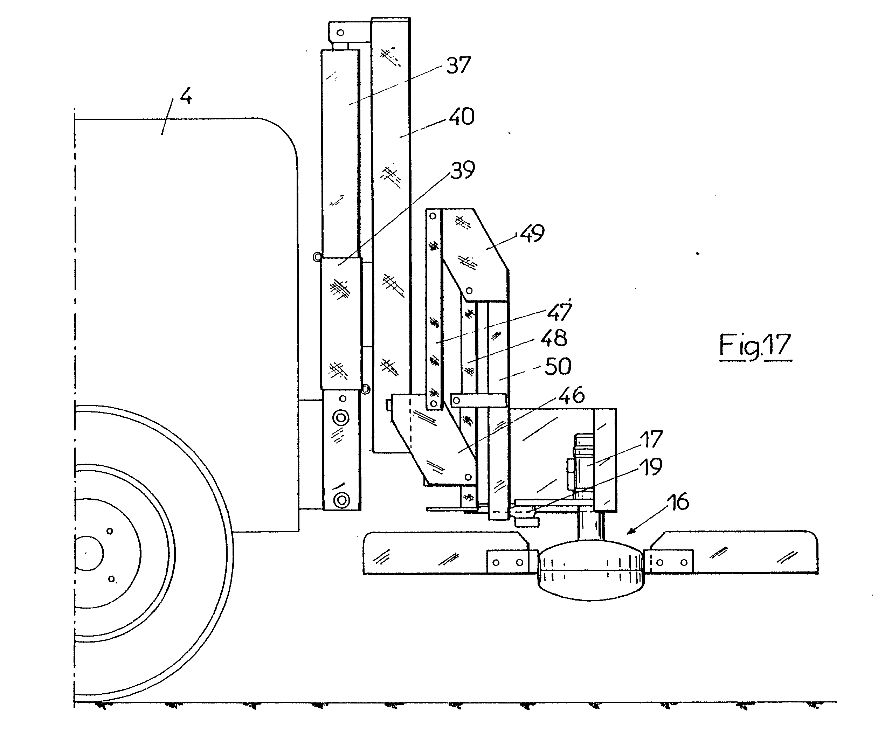

Les figures 14 à 17 illustrent un autre mode d'exécution du dispositif de relevage des deux bras de ratissage et de la suspension élastique des toupies de ratissage du giro-andaineur frontal selon l'invention.

Suivant ce mode d'exécution, le bâti fixe supportant les divers organes de la machine et permettant son montage amovible à l'avant du tracteur 4, comprend un mât central creux 37 à l'intérieur duquel est logé un vérin 38. Sur ce mât 37 ayant avantageusement une section carrée ou rectangulaire est monté un coulisseau 39 rigidement solidaire d'une colonne-support 40 disposée parallèlement audit mât et en avant de ce dernier. Le vérin 38 est assujetti, d'une part, par l'extrémité postérieure de son corps, à une pièce de fixation 37a telle qu'un axe, logée dans la partie inférieure du mât 37 et, d'autre part, par l'extrémité extérieure de sa tige, à une chape ou autre pièce d'attache 40a rigidement solidaire du sommet de la colonne-support 40 laquelle peut donc coulisser le long du mât 37. La partie inférieure de ladite colonne-support est rigidement solidaire d'une poutre télescopique horizontale disposée à l'avant de cette dernière. Cette poutre télescopique est constituée d'un tube extérieur 41 rigidement fixé à la colonne-support 40, et de deux bras coulissants 42 et 43 logés dans ledit tube extérieur. Deux vérins 44 et 45 fixés sur la face supérieure de l'élément fixe 41 de la poutre télescopique et parallèlement à cette dernière, permettent la sortie ou l'escamotage des bras 42 et 43, respectivement, la tige desdits vérins étant assujettie à l'extrémité extérieure desdits bras. Les extrémités extérieures opposées des bras coulissants 42 et 43 portent les organes sustentateurs des toupies de ratissage et de leur moteur hydraulique d'entraînement. Ces organes sustentateurs comprennent un parallélogramme déformable comportant un côté fixe 46 rigidement solidaire du bras 42 ou 43, deux côtés mobiles parallèles 47 et 48 articulés, d'une part, par l'une de leurs extrémités, sur ledit côté fixe et, d'autre part, par leur extrémité opposée sur le troisième côté mobile 49. Ce dernier est, par exemple, constitué par une paire de plaques entre lesquelles est fixée l'extrémité supérieure d'un bras vertical 50 dont l'extrémité inférieure porte le berceau de la rotule 19 de montage de la toupie de ratissage 16 et de son moteur hydraulique d'entraînement 17. Un ressort 51 agissant en traction est fixé, par ses extrémités, d'une part, sur un axe 52 solidaire du côté mobile 49 du parallélogramme déformable et, d'autre part, dans une chape 53 portée par l'extrémité extérieure des bras 42 et 43. Ce ressort 51 permet une suspension élastique de la toupie de ratissage et de son moteur d'entraînement au châssis porteur mobile constitué par la colonne-support 40 et la poutre télescopique 41-42-43.

L'effet de cette suspension élastique à ressort de traction est le même que celui précédemment décrit de la suspension élastique 32 à ressort de compression. Un faible déplacement vers le haut de la colonne-support 40 sous l'action du vérin 38, entraîne un mouvement identique du côté fixe 46 du parallélogramme ayant pour effet d'étirer le ressort 51 lequel exerce une force ascendante plus importante sur la toupie de ratissage.

La raideur du ressort 51 est également réglable. Pour celà, la chape 53 à laquelle est fixée l'une des extrémités dudit ressort est solidaire d'une tige filetée 54 traversant une patte d'attache 56 solidaire des bras 42 et 43. Un système d'écrou et de contre-écrou 55 disposé de part et d'autre de ladite patte d'attache et dans lequel se visse la tige filetée 54, autorise un déplacement axial de cette dernière et, par conséquent, permet de bander plus ou moins le ressort 51.

On comprend que, selon ce mode de réalisation du giro-andaineur, le relevage des deux ensembles de ratissage résulte de la mise en extension du vérin laquelle entraîne le coulissement vers le haut, de la colonne-support 40 portant lesdits ensembles.

On n'a pas décrit, ni représenté, les différentes canalisations d'alimentation et de retour des moteurs 17 et des vérins hydrauliques 5, 30, 38 et 12, afin de ne pas compliquer inutilement le présent exposé et les dessins annexés.

On comprend que suivant les trois modes d'exécution décrits et illustrés, le giro-andaineur comporte deux toupies de ratissage disposées symétriquement et dont la rotation en sens inverse permet, en position de travail, de constituer un andain à partir de l'avant et dans l'axe de progression du tracteur sur lequel est monté ledit giro-andaineur.

Ces toupies de ratissage peuvent être relevées à l'avant dudit tracteur en position de transport, tandis que grâce à leur dispositif de relevage commun et à leur suspension élastique indépendante, il est possible de régler la force de leur appui sur le sol.

## Revendications

1. Giro-andaineur frontal pour le ratissage des résidus de végétation tels que sarments de vignes coupés et bois de taille, ou de fruits tombés au sol, ou d'herbe coupée, comportant un bâti fixe (1-2, 24, 37) apte à être installé, de manière amovible, à l'avant d'un tracteur agricole et portant deux dispositifs de ratissage comprenant, chacun, au moins une toupie de ratissage rotative (16) et son moteur hydraulique (17) d'entraînement en rotation portés par un bras (10, 42-46-47-48-49-50, 43-46-47, 48-49-50), caractérisé en ce que lesdits dispositifs de ratissage sont assujettis à un système de relevage commun comprenant au moins un vérin (5, 30, 38), et en ce que les bras portant les toupies de ratissage (16) sont montés avec une aptitude de mouvement dans un plan perpendiculaire au plan vertical, ce mouvement étant obtenu au moyen de vérins (12 ; 44, 45) reliant lesdits bras à une poutre porteuse (1, 27, 41-42-43) qui soutient par ailleurs ces bras à une de leurs extrémités.

2. Giro-andaineur frontal suivant la revendication 1, caractérisé en ce que chacun des deux dispositifs de ratissage est assujetti à un dispositif de suspension élastique indépendant (32, 46-47-48-49-51).

3. Giro-andaineur frontal suivant la revendication 1, caractérisé en ce que l'unique système de relevage comprend un mât central extensible (5) constitué par un vérin dont le corps (5a) est solidaire du bâti (1) et dont la tige (5b) est reliée à chacun des deux bras porteurs (10) au moyen d'une bielle articulée (11a, 11b).

4. Giro-andaineur frontal selon l'une des revendications 1 ou 2, caractérisé en ce que le système de relevage commun aux deux dispositifs de ratissage comprend la poutre porteuse (27) qui est montée avec une aptitude de pivotement autour d'un axe (25) disposé transversalement par rapport à l'axe d'avancement (A'-A') dudit giro-andaineur, les bras (10) portant les toupies de ratissage (16) et leur moteur hydraulique (17) étant assujettis aux extrémités de cette poutre, de manière à pouvoir former un angle avec cette dernière dont le pivotement est obtenu au moyen d'un vérin (30) reliant une barre de contre-appui (29) rigidement solidaire du bâti fixe (24) de la machine et un levier (27a) rigidement solidaire de ladite poutre et disposé perpendiculairement à cette dernière.

5. Giro-andaineur frontal suivant l'une des revendications 1 ou 2, caractérisé en ce que le système de relevage commun aux deux dispositifs de ratissage comprend un mât central creux (37) à l'intérieur duquel est logé un vérin (38) assujetti, d'une part, à une pièce de fixation fixe (37a) logée dans la partie inférieure du mât et, d'autre part, au sommet d'une colonne-support (40) disposée parallèlement audit mât et montée avec une aptitude de coulissement le long de ce dernier, ladite colonne-support étant rigidement solidaire, dans sa partie inférieure, de la poutre porteuse, laquelle est télescopique et constituée d'un tube extérieur fixe (41) et de deux bras (42, 43) logés chacun avec une aptitude de coulissement à une extrémité dudit tube extérieur et dont les extrémités extérieures opposées portent les organes sustentateurs (46, 47, 48, 49, 50) des toupies de ratissage (16) et de leur moteur hydraulique (17) d'entraînement.

6. Giro-andaineur frontal selon les revendicatins 2 et 4, caractérisé en ce que chaque dispositif de suspension élastique indépendant (32) relie un bras (10) à une petite potence (33) rigidement solidaire de la poutre porteuse pivotante (27).

7. Giro-andaineur frontal suivant les revendications 2 et 6, caractérisé en ce que chaque dispositif de suspension élastique indépendant est constitué par un dispositif de suspension à ressort de compression (32) connu en soi.

8. Giro-andaineur frontal selon les revendications 2 et 5, caractérisé en ce que chaque dispositif de suspension élastique indépendant est constitué par un parallélogramme déformable (46-47-48-49) dont un côté (46) est rigidement solidaire de l'extrémité extérieure des bras coulissants (42, 43) de la poutre télescopique (41-42-43), un ressort (51) agissant en traction reliant ladite extrémité extérieure au côté mobile (49) du parallélogramme déformable opposé au côté fixe de ce dernier, ledit côté mobile portant la toupie de ratissage (16) et son moteur hydraulique (17) d'entraînement.

9. Giro-andaineur suivant l'une des revendications 7 et 8, caractérisé en ce que chaque dispositif de suspension élastique comprend des moyens de réglage (32b-32c-32d, 54-55-56) de la raideur de son ressort (32a, 51).

10. Giro-andaineur frontal suivant l'une quelconque des revendications 1 à 9, caractérisé en ce que chaque toupie de ratissage (16) est montée révolutive autour d'un axe (A-A) incliné vers l'intérieur et vers l'arrière en considérant l'axe (A'-A') et le sens de progression dudit giro-andaineur.

11. Giro-andaineur frontal selon la revendication 10, caractérisé en ce que chaque toupie de ratissage (16) est montée avec une inclinaison réglable ; des moyens (19, 20a, 20b, 20c) permettant d'immobiliser ladite toupie dans la position inclinée désirée.

12. Giro-andaineur frontal suivant la revendication 11, caractérisé en ce que chaque toupie de ratissage (16) et son moteur hydraulique (17) d'entraînement, sont suspendus à l'extrémité d'un bras-porteur (10, 50) ou autre organe sustentateur, au moyen d'une rotule (19).

13. Giro-andaineur frontal suivant la revendication 12, caractérisé en ce que la rotule (19) est portée par une plaque (18) sur laquelle est monté le moteur hydraulique (17), ladite rotule étant prise dans un berceau (20) composé d'une plaque (20a) rigidement solidaire du bras-porteur (10, 50) et d'une contre-plaque « flottante » (20b) assemblée à ladite plaque au moyen d'une paire de boulons (20c) disposés de part et d'autre des ouvertures (20d) à surface de contact sphérique que présentent lesdites plaque et contre-plaque pour l'appui de la rotule.

14. Giro-andaineur frontal suivant les revendications 1 et 4, caractérisé en ce que les bras (10) portant les toupies de ratissage sont assujettis à la poutre porteuse (27) au moyen de joints de cardan (31) dont les axes d'articulation sont alignés avec l'axe (25) autour duquel peut pivoter ladite poutre porteuse.

15. Giro-andaineur frontal suivant l'une quelconque des revendications 1 à 4, comportant un déflecteur (21) monté à proximité de chaque toupie de ratissage (16), caractérisé en ce que ce déflecteur est réalisé en deux parties dont l'une (21a) est solidaire du bras (10) à l'extrémité duquel est suspendue ladite toupie de ratissage, alors que l'autre (21b) est fixée au support du moteur hydraulique (17) d'entraînement de cette dernière.

16. Giro-andaineur frontal selon la revendication 15, caractérisé en ce que l'élément (21a) du déflecteur (21) solidaire du bras, est monté avec une possibilité de réglage dans le plan vertical.

17. Giro-andaineur frontal suivant la revendication 4, caractérisé en ce que la barre de contre-appui (29) forme butée de fin de course de relevage des dispositifs de ratissage (10-16-17).

18. Giro-andaineur frontal suivant l'une quelconque des revendications 1, 2, 10 ou 11, dont chaque toupie de ratissage (16) comprend un corps ou patin central (16a) et une pluralité de pales de ratissage (16b) disposées radialement à la périphérie de ce dernier, caractérisé en ce que ledit corps ou patin central a sensiblement la forme d'un éllipsoïde de révolution aplati.

## Claims

1. Frontal rotary wind rower for the raking of the residues of vegetation such as the branches of cut vines and pruning wood, or fruit fallen to the ground, or cut grass, comprising a fixed frame (1-2, 24, 37) adapted to be installed, in removable manner, at the front of an agricultural tractor and carrying two raking devices each comprising at least one rotary raking spinner (16) and its hydraulic rotary driving motor (17) carried by an arm (10, 42-46-47-48-49-50, 43-46-47-48-49-50) characterised in that the said raking devices are coupled to a common lifting system comprising at least one jack (5, 30, 38) and in that the arms carrying the raking spinners (16) are mounted with a capability of movement in a plane perpendiculaar to the vertical plane, this movement being obtained by means of jacks (12 ; 44, 45) coupling the said arms to a support beam (1, 27, 41-42-43) which moreover supports these arms at one of their ends.

2. Frontal rotary wind rower according to claim 1, characterised in that each of the two raking devices is connected to an independent resilient suspension device (32, 46-47-48-49-51).

3. Frontal rotary wind rower according to claim 1, characterised in that the single lifting system comprises a central extensible mast (5) constituted by a jack of which the body (5a) is fast with the frame (1) and of which the rod (5b) is coupled to each of the two support arms (10) by means of an articulated connecting rod (11a, 11b).

4. Frontal rotary wind rower according to one of claims 1 or 2, characterised in that the lifting system common to the two raking devices comprises the support beam (27) which is mounted with a capability of pivoting about an axle (25) disposed transversely with respect to the axis of advancement (A'-A') of the said rotary wind rower, the arms (10) carrying the raking spinners (16) and their hydraulic motor (17) being coupled to the ends of this beam in such a manner as to form an angle with this latter, the pivoting of which is obtained by means of a jack (30) coupling a counterthrust bar (29) rigidly fast with the fixed frame (24) of the machine and a lever (27a) rigidly fast with the said beam and disposed perpendicularly to this latter.

5. Frontal rotary wind rower according to one of claims 1 or 2, characterised in that the lifting system common to the two raking devices comprises a central hollow mast (37) at the interior of which there is positioned a jack (38) coupled, on the one hand, to a fixed securing member (37a) housed in the lower part of the mast and, on the other hand, to the apex of a support column (40) disposed parallel to the said mast and mounted with a capability of sliding along this latter, the said support column being rigidly fast, in its lower part, with the support beam which is telescopic and constituted by an external fixed tube (41) and two arms (42, 43) each positioned with a capability of sliding at one end of the said external tube and of which the opposed external ends carry the supporting elements (46, 47, 48, 49, 50) for the raking spinners (16) and for their hydraulic drive motor (17).

6. Frontal rotary wind rower according to claims 2 and 4, characterised in that each independent resilient suspension device (32) couples an arm (10) to a small bracket (33) rigidly fast with the pivoting support beam (27).

7. Frontal rotary wind rower according to claims 2 and 6, characterised in that each independent resilient suspension device is constituted by a known compression spring suspension device (32).

8. Frontal rotary wind rower according to claims 2 and 5, characterised in that each independent resilient support device is constituted by a deformable parallelogram (46-47-48-49) of which a side (46) is rigidly fast with the external end of the sliding arms (42, 43) of the telescopic beam (41-42-43), a spring (51) acting in traction coupling the said external end to the movable side (49) of the deformable parallelogram opposite to the fixed side of this latter, the said movable side carrying the raking spinner (16) and its hydraulic driving motor (17).

9. Frontal rotary wind rower according to one of claims 7 and 8, characterised in that each resilient suspension device comprises means (32b-32c-32d, 54-55-56) for adjustment of the stiffness of its spring (32a, 51).

10. Frontal rotary wind rower according to any one of claims 1 to 9, characterised in that each raking spinner (16) is mounted rotatably about an axis (A-A) inclined towards the interior and towards the rear, in relation to the axis (A'-A') and the direction of advance of the said frontal rotary wind rower.

11. Frontal rotary wind rower according to claim 10, characterised in that each raking spinner (16) is mounted with an adjustable inclination, means (19, 20a, 20b, 20c) permitting to immobilise the said spinner in the desired inclined position.

12. Frontal rotary wind rower according to claim 11, characterised in that each raking spinner (16) and its hydraulic driving motor (17) are suspended at the end of a carrying arm (10, 50) or other supporting member, by means of a ball (19).

13. Frontal rotary wind rower according to claim 12, characterised in that the ball is carried by a plate (18) on which is mounted the hydraulic motor (17), the said ball being held in a cradle (20) composed of a plate (20a) rigidly fast with the support arm (10, 50) and a « floating » counter plate (20b) assembled with the said plate by means of a pair of bolts (20c) disposed at each side of openings (20d) with spherical contact surface provided by the said plate and counter plate for bearing on the ball.

14. Frontal rotary wind rower according to claims 1 and 4, characterised in that the arms (10) carrying the raking spinners are coupled to the support beam (27) by means of cardan joints (31) the axes of pivoting of which are aligned with the axis (25) about which the said support beam can pivot.

15. Frontal rotary wind rower according to any one of the claims 1 to 4, comprising a deflector (21) mounted in proximity to each raking spinner (16) characterised in that this deflector is made of two parts of which one (21a) is fast with the arm (10) at the end of which is suspensed the said raking spinner, whilst the other (21b) is fixed to

the support of the hydraulic driving motor of this latter.

16. Frontal rotary wind rower according to claim 15, characterised in that the element (21a) of the deflector (21) fast with the arm is mounted with a possibility of adjustment in the vertical plane.

17. Frontal rotary wind rower according to claim 4, characterised in that the counterthrust bar (29) forms a stop for the end of lifting stroke of the raking devices (10-16-17).

18. Frontal rotary wind rower according to any one of claims 1, 2, 10 or 11, of which each raking spinner (16) comprises a central body or runner (16a) and a plurality of raking blades (16b) disposed radially at the periphery of this latter, characterised in that the said central body or runner has substantially the shape of a flattened ellipsoid of revolution.

## Patentansprüche

1. Frontal angeordneter Kreiselschwadrechen für das Zusammenrechen von Pflanzenrückständen wie z. B. abgeschnittenen Weinranken und Schnittholz oder zu boden gefallenen Früchten oder geschnittenem Gras, der einen abnehmbar an der Vorderseite eines landwirtschaftlichen Traktors anbringbaren, feststehenden Rahmen (1-2, 24, 37) aufweist und zwei Recheinrichtungen trägt, wovon jede mindestens einen rotierenden Kreiselrechen (16) und dessen Hydraulikmotor (17) für den Rotationsantrieb aufweist, die von einem Arm (10, 42-46-47-48-49-50, 43-46-47-48-49-50) getragen werden, dadurch gekennzeichnet, daß die besagten Recheinrichtungen an einem gemeinsamen Hubsystem befestigt sind, das mindestens einen Zylinder (5, 30, 38) aufweist, und daß die Arme, welche die Kreiselrechen (16) tragen, bewegungsfähig in einer zur vertikalen Ebene lotrechten Ebene montiert sind, wobei diese Bewegung mit Hilfe von Zylindern (12 ; 44, 45) erreicht wird, die die besagten Arme mit einem Hauptträger (1, 27, 41-42-43) verbinden, der außerdem diese Arme an einem ihrer Enden abstützt.

2. Frontal angeordneter Kreiselschwadrechen gemäß Anspruch 1, dadurch gekennzeichnet, daß jede der beiden Recheinrichtungen an einer unabhängigen Federaufhängevorrichtung (32, 46-47-48-49-51) befestigt ist.

3. Frontal angeordneter Kreiselschwadrechen gemäß Anspruch 1, dadurch gekennzeichnet, daß das alleinige Hubsystem einen ausziehbaren Hauptmast (5) aufweist, der aus einem Zylinder besteht, dessen Körper (5a) mit dem Rahmen (1) starr verbunden und dessen Schaft (5b) an jedem der beiden Tragarme (10) mittels einer Gelenkstange (11a, 11b) befestigt ist.

4. Frontal angeordneter Kreiselschwadrechen gemäß einem der Ansprüche 1 oder 2, dadurch gekennzeichnet, daß das den beiden Recheinrichtungen gemeinsame Hubsystem den Hauptträger (27) aufweist, der verschwenkbar um eine bezogen auf die Vorschubachse (A'-A') des besagten Kreiselschwadrechens quer angeordnete Achse (25) montiert ist, wobei die die Kreiselrechen (16) und deren Hydraulikmotor (17) tragenden Arme (10), so an den Enden dieses Trägers befestigt sind, daß sie mit dem letzteren einen Winkel bilden können, dessen Verschwenkung mit Hilfe eines Zylinders (30) erreicht wird, der eine mit dem stationären Rahmen (24) der Maschine starr verbundene Gegenstützschiene (29) und einen Hebel (27a) verbindet, welcher mit dem besagten Träger starr verbunden und zu diesem letzteren lotrecht angeordnet ist.

5. Frontal angeordneter Kreiselschwadrechen gemäß einem der Ansprüche 1 oder 2, dadurch gekennzeichnet, daß das den beiden Recheinrichtungen gemeinsame Hubsystem einen hohlen Hauptmast (37) aufweist, in dessen Innerem ein Zylinder (38) untergebarcht ist, der einerseits an einem im unteren Teil des Mastes sitzenden, feststehenden Befestigungsstück (37a), und andererseits an der Spitze einer Stützsäule (40) befestigt ist, die zu dem besagten Mast parallel angeordnet und mit Gleitmöglichkeit entlang dem letzteren montiert ist, wobei die besagte Stützsäule an ihrem Unterteil mit dem teleskopartig ausgeführtem Hauptträger starr verbunden ist, und aus einem feststehenden, äußeren Rohr (41) und zwei Armen (42, 43) besteht, die beide gleitend an einem Ende des besagten äußeren Rohrs sitzen und deren gegenüberliegende äußere Enden die Stützorgane (46, 47, 48, 49, 50) für die Kreiselrechen (16) und deren Hydraulikmotor (17) für den Antrieb tragen.

6. Frontal angeordneter Kreiselschadrechen gemäß den Ansprüchen 2 und 4, dadurch gekennzeichnet, daß jede unabhängige Federaufhängevorrichtung (32) einen Arm (10) mit einem kleinen Auslegerarm (33) verbindet, der mit dem verschwenkbaren Hauptträger (27) starr verbunden ist.

7. Frontal angeordneter Kreiselschwadrechen gemäß den Ansprüchen 2 und 6, dadurch gekennzeichnet, daß jede unabhängige Federaufhängevorrichtung aus einer Aufhängevorrichtung mit Druckfeder (32) der bereits bekannten Art besteht.

8. Frontal angeordneter Kreiselschwadrechen gemäß den Ansprüchen 2 und 5, dadurch gekennzeichnet, daß jede unabhängige Federaufhängevorrichtung aus einem verformbaren Parallelogramm (46-47-48-49) besteht, dessen eine Seite (46) starr mit dem äußeren Ende der verschiebbaren Arme (42, 43) des teleskopartigen Trägers (41-42-43) verbunden ist, wobei eine bei Zug wirkende Feder (51) das besagte äußere Ende mit der beweglichen Seite (49) des verformbaren Parallelogramms verbindet, das der stationären Seite des letzteren gegenüberliegt, wobei die besagte bewegliche Seite den Kreiselrechen (16) und seinen Hydraulikmotor (17) für den Antrieb trägt.

9. Frontal angeordneter Kreiselschwadrechen gemäß einem der Ansprüche 7 und 8, dadurch gekennzeichnet, daß jede Federaufhängevorrichtung Einstellmittel (32b-32c-32d, 54, 55, 56) für die Härte ihrer Feder (32a, 51) aufweist.

10. Frontal angeordneter Kreiselschwadrechen gemäß einem der Ansprüche 1 bis 9, dadurch gekennzeichnet, daß jeder Kreiselrechen (16) umlaufend um eine Achse (A-A) montiert ist, welche unter Berücksichtigung der Achse (A'-A') und der Fortbewegungsrichtung des besagten Kreiselschwadrechens nach innen und nach hinten geneigt ist.

11. Frontal angeordneter Kreiselschwadrechen gemäß Anspruch 10, dadurch gekennzeichnet, daß jeder Kreiselrechen (16) mit einer einstellbaren Neigung montiert ist; wobei es Mittel (19, 20a, 20b, 20c) ermöglichen den besagten Kreisel in der gewünschten Schrägstellung festzustellen.

12. Frontal angeordneter Kreiselschwadrechen gemäß Anspruch 11, dadurch gekennzeichnet, daß jeder Kreiselrechen (16) und sein Hydraulikmotor (17) für den Antreib an dem Ende eines Tragarms (10, 50) oder einem anderen Stützorgan mittels eines Kugelgelenks (19) aufgehängt ist.

13. Frontal angeordneter Kreiselschwadrechen gemäß Anspruch 12, dadurch gekennzeichnet, daß das Kugelgelenk (19) von einer Platte (18) gehalten wird, auf welcher der Hydraulikmotor (17) montiert ist, wobei das Kugelgelenk in einer Wiege (20) gehalten wird, die sich aus einer starr mit dem Tragarm (10, 50) verbundenen Platte (20a) und einer « schwimmenden » Gegenplatte (20b) zusammensetzt, die an der besagten Platte mittels eines Paares Durchgangsbolzen (20c) montiert ist, welche auf beiden Seiten der Öffnungen (20d) mit runder Kontaktfläche welche die besagte Platte und Gegenplatte zur Auflage des Kugelgelenks aufweisen, angeordnet sind.

14. Frontal angeordneter Kreiselschwadrechen gemäß den Ansprüchen 1 und 4, dadurch gekennzeichnet, daß die die Kreiselrechen tragenden Arme (10) an dem Hauptträger (27) mit Hilfe von Kardangelenken (31) befestigt sind, deren Gelenkbolzen mit der Achse (25) ausgerichtet sind, um welche der besagte Hauptträger schwenken kann.

15. Frontal angeordneter Kreiselschwadrechen gemäß einem der Ansprüche 1 bis 4, der einen nahe bei jedem Kreiselrechen (16) montierten Abweiser (21) aufweist, dadurch gekennzeichnet, daß dieser Abweiser in zwei Teilen ausgeführt ist, dessen einer (21a) mit dem Arm (10) starr verbunden ist, an dessen Ende der besagte Kreiselrechen aufgehängt ist, während der andere (21b) an dem Bock des Hydraulikmotors (17) zum Antrieb des Kreiselrechens befestigt ist.

16. Frontal angeordneter Kreiselschwadrechen gemäß Anspruch 15, dadurch gekennzeichnet, daß das Element (21a) des mit dem Arm starr verbundenen Abweisers (21) einstellbar in der vertikalen Ebene montiert ist.

17. Frontal angeordneter Kreiselschwadrechen gemäß Anspruch 4, dadurch gekennzeichnet, daß die Gegenstützschiene (29) den Endanschlag für den Hub der Recheinrichtungen (10-16-17) bildet.

18. Frontal angeordneter Kreiselschwadrechen gemäß einem der Ansprüche 1, 2, 10 oder 11, bei dem jeder Kreiselrechen (16) einen Körper oder Hauptkufe (16a) und mehrere, an der Peripherie dieses letzteren radial angeordnete Rechflügel (16b) aufweist, dadurch gekennzeichnet, daß der besagte Körper oder Hauptkufe deutlich die Form eines abgeplatteten Umdrehungsellipsoids aufweist.

Fig.1

Fig.2

Fig.3

Fig.4

Fig.5

Fig.6

Fig.7

Fig.8

0 053 570

Fig.9

Fig.18

Fig.10

0 053 570

Fig.19

Fig.12

Fig.13

Fig.14

Fig.15

0 053 570

Fig. 16

0 053 570

Fig.17